(19) Europäisches Patentamt
European Patent Office
Office européen des brevets

(11) **EP 2 958 869 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **14705187.4**

(22) Anmeldetag: **19.02.2014**

(51) Int Cl.:
*C03C 4/04* *(2006.01)*     *C03B 32/02* *(2006.01)*
*C03B 19/14* *(2006.01)*    *C03C 3/06* *(2006.01)*
*C03B 32/00* *(2006.01)*    *G02B 1/02* *(2006.01)*

(86) Internationale Anmeldenummer:
**PCT/EP2014/053199**

(87) Internationale Veröffentlichungsnummer:
**WO 2014/128148 (28.08.2014 Gazette 2014/35)**

(54) **OPTISCHES BAUTEIL AUS QUARZGLAS ZUR VERWENDUNG IN DER ARF-EXCIMERLASER-LITHOGRAPHIE SOWIE VERFAHREN ZUR HERSTELLUNG DES BAUTEILS**

OPTICAL COMPONENT MADE OF QUARTZ GLASS FOR USE IN AR-F EXCIMER LASER LITHOGRAPHY, AND METHOD FOR PRODUCING THE COMPONENT

COMPOSANT OPTIQUE EN VERRE DE QUARTZ DESTINÉ À ÊTRE UTILISÉ EN LITHOGRAPHIE PAR LASER À EXCIMÈRE AR-F ET PROCÉDÉ DE FABRICATION DUDIT COMPOSANT

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **20.02.2013 DE 102013101687**

(43) Veröffentlichungstag der Anmeldung:
**30.12.2015 Patentblatt 2015/53**

(73) Patentinhaber: **Heraeus Quarzglas GmbH & Co. KG**
**63450 Hanau (DE)**

(72) Erfinder: **KUEHN, Bodo**
**63571 Gelnhausen (DE)**

(74) Vertreter: **Staudt, Armin Walter**
**Sandeldamm 24a**
**63450 Hanau (DE)**

(56) Entgegenhaltungen:
**EP-A1- 1 327 612     DE-T5-112008 003 728**
**US-A1- 2010 162 759**

EP 2 958 869 B1

**Beschreibung**

Technisches Gebiet der Erfindung

Die Erfindung betrifft ein optisches Bauteil aus synthetischem Quarzglas zur Verwendung in der ArF-Excimerlaser-Lithographie mit einer Einsatzwellenlänge von 193 nm, mit einer Glasstruktur im Wesentlichen ohne Sauerstoffdefektstellen, einem Wasserstoffgehalt im Bereich von $0,1 \times 10^{16}$ Molekülen/cm$^3$ bis $1,0 \times 10^{18}$ Molekülen/cm$^3$ und einem Gehalt an SiH-Gruppen von weniger als $2 \times 10^{17}$ Molekülen/cm$^3$ und mit einem Gehalt an Hydroxylgruppen im Bereich zwischen 0,1 und 100 Gew.-ppm, wobei die Glasstruktur eine fiktive Temperatur von weniger 1070 °C aufweist.

Weiterhin betrifft die Erfindung ein Verfahren zur Herstellung eines derartigen optischen Bauteils.

Stand der Technik

Ein derartiges optisches Bauteil aus synthetischem Quarzglas und ein Verfahren für seine Herstellung sind aus der WO 2009/106134 A1 bekannt. Das optische Bauteil hat eine Glasstruktur im Wesentlichen frei von Chlor, Sauerstoffdefektstellen und SiH-Gruppen (unterhalb der Nachweisgrenze von $5 \times 10^{16}$ Molekülen/cm$^3$). Innerhalb eines Durchmessers von 280 mm (CA-Bereich) zeigt es einen mittleren Wasserstoffgehalt von etwa $3 \times 10^{16}$ Molekülen/cm$^3$ sowie einen Hydroxylgruppengehalt von 25 Gew.-ppm.

Zur Herstellung des Bauteils wird ein $SiO_2$-Sootkörper so getrocknet, dass sich im daraus erzeugten Quarzglas ein mittlerer Hydroxylgruppengehalt von weniger als 60 Gew.-ppm einstellt. Vor dem Verglasen wird der Sootkörper einer Konditionierungsbehandlung unterzogen, die eine Behandlung mit Stickoxid umfasst. Zum Abbau mechanischer Spannungen wird der Quarzglasrohling einer Temperbehandlung unterzogen und abschließend in einer Atmosphäre aus 80 Vol.-% Stickstoff und 20 Vol.-% Wasserstoff bei 400 °C bei einem Absolutdruck von 1 bar während einer Dauer von 80 h mit Wasserstoff beladen.

Herstellungsbedingt kann das so hergestellte synthetische Quarzglas Stickstoff enthalten, der im Glasnetzwerk chemisch gebunden ist. Es zeigt ein günstiges Schädigungsverhalten bei kurzwelliger UV-Laserstrahlung insbesondere hinsichtlich der sogenannten "Kompaktierung".

Technische Aufgabenstellung

Beim Schädigungsverhalten der "Kompaktierung" tritt während oder nach energiereicher UV-Laserbestrahlung des Glases eine lokale Dichteerhöhung im durchstrahlten Volumen auf. Diese verursacht eine lokale Erhöhung des Brechungsindex, die bei andauernder Bestrahlung fortschreitet und damit zu einer zunehmenden Verschlechterung der Abbildungseigenschaften des optischen Bauteils und letztlich zum frühzeitigen Ausfall des Bauteils führt.

Der Einfachheit halber wird die Änderungen der Brechungsindexverteilung infolge Kompaktierung häufig nicht bei der Einsatzwellenlänge, wie etwa bei 193 nm, sondern unter Einsatz eines mit einem Helium-Neon-Laser ausgestatteten Fizeau-Interferometers mit einer Messwellenlänge von 633 nm ermittelt (genauer: bei einer Wellenlänge von 632,8 nm).

Es hat sich nun gezeigt, dass Quarzgläser trotz gleicher oder ähnlicher Messwerte ihrer Kompaktierung bei einer Messwellenlänge von 633 nm, bei einer Messwellenlänge bei 193 nm überraschend unterschiedliche Schädigungsverhalten zeigen können. Dies ist besonders dann problematisch, wenn das zu messende Quarzglas bei einer Messwellenlänge von 633 nm ein durchaus akzeptables Kompaktierungsverhalten nahelegt, beim Einsatz mit der Einsatzwellenlänge aber unerwartet deutlich schlechtere Werte zeigt oder sogar unbrauchbar ist.

Der Erfindung liegt daher die Aufgabe zugrunde, ein optisches Bauteil zur Verwendung in der ArF-Excimerlaser-Lithographie mit einer Einsatzwellenlänge von 193 nm bereit zu stellen, das ausgehend von einer Messung des Kompaktierungsverhaltens bei einer Messwellenlänge von 633 nm eine verlässliche Prädiktion zum Kompaktierungsverhalten beim Einsatz mit UV-Laserstrahlung der Einsatzwellenlänge ermöglicht.

Weiterhin liegt der Erfindung die Aufgabe zugrunde, ein Verfahren anzugeben, welches zur Herstellung eines derartigen optischen Bauteils geeignet ist.

Allgemeine Beschreibung der Erfindung

Hinsichtlich des optischen Bauteils wird diese Aufgabe ausgehend von einem Bauteil der eingangs genannten Gattung erfindungsgemäß dadurch gelöst, dass seine Glasstruktur auf Bestrahlung mit Strahlung einer Wellenlänge von 193 nm mit $5 \times 10^9$ Pulsen mit einer Pulsbreite von 125 ns und einer Energiedichte von jeweils 500 $\mu J/cm^2$ sowie einer Pulswiederholfrequenz von 2000 Hz mit einer laserinduzierten Brechzahländerung reagiert, deren Betrag bei Vermessung mit der Einsatzwellenlänge von 193 nm einen ersten Messwert $M_{193nm}$ und bei Vermessung mit einer Messwellenlänge von 633 nm einen zweiten Messwert $M_{633nm}$ ergibt, wobei gilt: $M_{193nm}/M_{633nm} < 1,7$.

Die Dosis der Bestrahlung mit Strahlung der Einsatzwellenlänge ist definiert durch Pulsanzahl der Laserpulse, deren Pulsbreite und Energiedichte sowie die Pulswiederholfrequenz. Das erfindungsgemäße Bauteil zeigt bei dieser Bestrahlungsdosis ein Kompaktierungsverhalten mit folgenden charakteristischen Merkmalen:

(a) Die jeweiligen Messwerte $M_{193nm}$ und $M_{633nm}$ der Messungen des Kompaktierungsverhaltens bei 193 nm und bei 633 nm zeigen nach der oben spezifizierten Bestrahlungsdosis ein Verhältnis $M_{193nm}/M_{633nm}$, das kleiner ist als 1,7.

Dabei handelt es sich um ein vergleichsweise kleines Verhältnis $M_{193nm}/M_{633nm}$. Es hat sich gezeigt, dass das kleine Verhältnis nicht nur für eine gute Kompaktierungsresistenz des Glases steht, sondern auch unverzichtbare Bedingung für die Vorhersagbarkeit der Kompaktierung selbst ist.

(b) Denn es hat sich gezeigt, dass beim erfindungsgemäßen Quarzglas dieses kleine Verhältnis $M_{193nm}/M_{633nm}$ - das die Bedingung (a) erfüllt - auch dann nahezu konstant bleibt, wenn die Bestrahlungsdosis die oben spezifizierte Dosis überschreitet.

Die Kenntnis dieses konstanten Verhältnisses ermöglicht es, die Kompaktierung infolge Bestrahlung mit der Einsatzwellenlänge auch für jede höhere Bestrahlungsdosis als die oben spezifizierte exakt oder zumindest mit hinreichender Genauigkeit zu berechnen, und zwar auf Basis einer Messung bei 633 nm.

Bei gesicherter Kenntnis der Erfüllung von Bedingung (a) ist es somit infolge von Bedingung (b) möglich, durch Messungen bei einer Wellenlänge von 633 nm das Kompaktierungsverhalten beim Einsatz des Quarzglases mit UV-Laserstrahlung von 193 nm verlässlich vorherzusagen.

Die Glasstruktur ist im Wesentlichen frei von Sauerstoffdefektstellen. Darunter wird eine Glasstruktur verstanden, bei der die Konzentrationen von Sauerstoff-Unterschussdefekten und von Sauerstoff-Überschussdefekten unterhalb der Nachweisbarkeitsgrenze der Methode von Shelby liegen.

Diese Nachweismethode ist veröffentlicht in "Reaction of hydrogen with hydroxyl-free vitreous silica" (J. Appl. Phys., Vol. 51, No. 5 (Mai 1980), S. 2589-2593). Quantitativ ergibt sich dabei eine Anzahl an Sauerstoff-Unterschussdefekten oder an Sauerstoff-Überschussdefekten in der Glasstruktur von nicht mehr als etwa $10^{17}$ pro Gramm Quarzglas.

Anhand dieser Methode wird auch der Gehalt an SiH-Gruppen ermittelt, wobei eine Kalibrierung anhand der chemischen Reaktion erfolgt: $Si\text{-}O\text{-}Si + H_2 \rightarrow Si\text{-}H + Si\text{-}OH$.

SiH-Gruppen und Wasserstoff stehen im thermodynamischen Gleichgewicht miteinander. Der Gehalt an SiH-Gruppen liegt im Quarzglas des erfindungsgemäßen Bauteils bei weniger als $2 \times 10^{17}$ Molekülen/$cm^3$, und der Wasserstoffgehalt im Bereich von $0,1 \times 10^{16}$ Molekülen/$cm^3$ bis $1,0 \times 10^{18}$ Molekülen/$cm^3$.

SiH-Gruppen entstehen somit durch Reaktion mit molekularem Wasserstoff unter Aufspaltung des $SiO_2$-Netzwerks. Sie sind unerwünscht, da aus ihnen bei Bestrahlung mit energiereichem UV-Licht ein sogenanntes E'-Zentrum und atomarer Wasserstoff entstehen kann. Das E'-Zentrum bewirkt eine erhöhte Absorption bei einer Wellenlänge von 210 nm und macht sich auch im angrenzenden UV-Wellenlängenbereich ungünstig bemerkbar.

Der Wasserstoffgehalt ($H_2$-Gehalt) wird anhand einer Raman-Messung ermittelt, wie vorgeschlagen in: "Khotimchenko et al.; Determining the Content of Hydrogen Dissolved in Quartz Glass Using the Methods of Raman Scattering and Mass Spectrometry; Zhurnal Prikladnoi Spektroskopii, Vol. 46, No. 6 (Juni 1987), S. 987-991".

Der Gehalt an Hydroxylgruppen liegt im Bereich zwischen 0,1 und 100 Gew.-ppm, vorzugsweise zwischen 10 bis 60 Gew.-ppm. Er ergibt sich durch Messung der IR-Absorption nach der Methode von D. M. Dodd et al. ("Optical Determinations of OH in Fused Silica", (1966), S. 3911).

Mit abnehmendem Hydroxylgruppengehalt nimmt die Viskosität von Quarzglas zu. Der geringe Hydroxylgruppengehalt von weniger als 100 Gew.-ppm führt zu einer rigideren Glasstruktur und verbessert das Verhalten gegenüber einer lokalen anisotropen Dichteänderung, insbesondere bei linear polarisierter UV-Strahlung. Es wurde auch vermutet, dass die Dichteänderung bei der Kompaktierung mit einer Umlagerung von Hydroxylgruppen einhergeht, wobei dieser Umlagerungsmechanismus umso wahrscheinlicher und leichter abläuft, je mehr Hydroxylgruppen zur Verfügung stehen.

Die fiktive Temperatur der Glasstruktur liegt niedriger als 1070 °C, vorzugsweise niedriger als 1055 °C. Deren Messverfahren, beruhend auf einer Messung der Raman-Streuintensität bei einer Wellenzahl von etwa 606 $cm^{-1}$ ist beschrieben in "Ch. Pfleiderer et. al.; "The UV-induced 210 nm absorption band in fused Silica with different thermal history and stoichiometry"; J. Non-Cryst. Solids 159 (1993) 145-143".

Der Gehalt an Fluor beträgt bevorzugt weniger als 10 Gew.-ppm und der an Chlor vorzugsweise weniger als 0,1 Gew.-ppm. Halogene können unter Aufspaltung mit dem Si02-Glasnetzwerk reagieren und dieses dadurch schwächen.

Es hat sich gezeigt, dass die Vorhersagbarkeit des Kompaktierungsverhaltens beim Einsatz des Quarzglases mit UV-Laserstrahlung von 193 nm durch die Messung bei einer Wellenlänge von 633 nm umso verlässlicher ist, je kleiner das Verhältnis von erstem und zweitem Messwert ist.

Daher wird eine Ausführungsform des Bauteil besonders bevorzugt, bei dem bei der Vermessung der laserinduzierten Brechzahländerung für das Verhältnis von erstem Messwert $M_{193nm}$ und zweitem Messwert $M_{633nm}$ gilt: $M_{193nm}/M_{633nm} < 1,6$ und bevorzugt: $M_{193nm}/M_{633nm} < 1,55$.

Hinsichtlich des Verfahrens wird die oben angegebene Aufgabe erfindungsgemäß durch ein Verfahren gelöst, das die folgenden Verfahrensschritte umfasst:

(a) Erzeugen eines porösen Sootkörpers aus $SiO_2$ durch Flammenhydrolyse einer Silizium enthaltenden Ausgangssubstanz,

(b) Trocknen des Sootkörpers,

(c) Behandeln es Sootkörpers in einer oxidierend wirkenden Atmosphäre, die $N_2O$ enthält, bei einer Behandlungstemperatur von weniger als 500 °C, wobei der $N_2O$-Gehalt der Atmosphäre zwischen 0,1 und 10 Vol.-% und die Behandlungsdauer mindestens 10 h betragen, mit der Maßgabe, dass durch das Trocknen nach Verfahrensschritte (b) und durch das Behandeln gemäß Verfahrensschritt (c) ein Hydroxylgruppengehalt im Sootkörper eingestellt wird, derart, dass durch

(d) anschließendes Sintern des Sootkörpers ein Halbzeug aus Quarzglas erhalten wird, das einen mittleren Hydroxylgruppengehalt im Bereich zwischen 0,1 und 100 Gew.-ppm aufweist, und

(e) Formen des Halbzeugs zu einem Rohling aus Quarzglas und Tempern des Rohlings derart, dass er eine mittlere fiktive Temperatur von weniger als 1070 °C aufweist,

(f) Beladen des Rohlings mit Wasserstoff durch Erhitzen in einer Wasserstoff enthaltenden Atmosphäre bei einer Temperatur unterhalb von 400 °C unter Erzeugung eines mittleren Wasserstoffgehalts im Bereich von $0,1 \times 10^{16}$ Molekülen/$cm^3$ bis $1,0 \times 10^{18}$ Molekülen/$cm^3$.

Das Quarzglas für das erfindungsgemäße optische Bauteil wird nach dem so genannten "Sootverfahren" hergestellt. Dabei fällt als Zwischenprodukt ein poröser Körper aus $SiO_2$-Ruß an (hier als "Sootkörper" bezeichnet). Dessen Porosität ermöglicht es, die chemische Zusammensetzung und damit auch direkt die $SiO_2$-Netzwerkstruktur zu verändern und an besondere Anforderungen anzupassen; insbesondere können die Konzentrationen an Hydroxylgruppen und Halogenen reduziert und auf vorgegebene Werte eingestellt oder Komponenten wie Sauerstoff oder Stickstoff hinzugefügt werden.

Das Trocknen des Sootkörpers erfolgt durch Erhitzen unterhalb der Verglasungstemperatur entweder in einer halogenhaltigen Atmosphäre oder - vorzugsweise - unter Vakuum. Das Trocknen führt zu einer möglichst gleichmäßigen Reduzierung der herstellungsbedingt im Sootkörper enthaltenen Hydroxylgruppen auf den vorgegebenen Wert. Die nachfolgenden Behandlungsschritte haben im Idealfall auf den Hydroxylgruppengehalt keinen nennenswerten Einfluss mehr.

Als wesentlich für das Kompaktierungsverhalten des Quarzglases ist ein Behandlungsschritt des porösen Sootkörpers in einer oxidierend wirkenden Atmosphäre, die $N_2O$ enthält.

Distickstoffmonoxid ($N_2O$) zerfällt bei hoher Temperatur in Sauerstoff und reaktive Stickstoffatome oder -verbindungen, die in der Lage sind, mit den Defektstellen der Quarzglas-Netzwerkstruktur zu reagieren und diese abzusättigen und so zu eliminieren. Das Glasnetzwerk wird so verfestigt.

Neben der oxidativen Behandlung mit $N_2O$ liefern Nachbehandlungen des aus dem Sootkörper nach Verglasen erhaltenen Quarzglas-Rohlings einen weiteren wesentlichen Beitrag für diesen Effekt. Dabei wird einerseits durch Tempern des Rohlings eine mittlere fiktive Temperatur von weniger als 1070 °C eingestellt, und andererseits wird der Rohling durch Erhitzen in einer Wasserstoff enthaltenden Atmosphäre mit Wasserstoff beladen.

Anschließend wird der Sootkörper unter Vakuum zu einem zylinderförmigen Quarzglasrohling verglast. Durch das Vakuum wird molekularer Wasserstoff entfernt, der beim Flammhydrolyseverfahren in das Quarzglas eingebracht wird, und der andernfalls bei nachfolgenden Heißbehandlungsschritten zu unerwünschten SiH-Gruppen weiter reagieren würde.

Nach dem Verglasen liegt ein Quarzglasrohling mit einem Hydroxylgruppengehalt im Bereich zwischen 0,1 und 100 Gew.-ppm vor, der im Wesentlichen frei von SiH-Gruppen und von Wasserstoff ist (der Gehalt dieser beiden Komponenten liegt unterhalb der Nachweisgrenze).

Zum Abbau mechanischer Spannungen und zur Verminderung der Doppelbrechung sowie zur Erzeugung einer kompaktierungsresistenten Glasstruktur wird der Quarzglasrohling einer Temperbehandlung unterzogen, die so geführt wird, dass sich über das Volumen gemessen eine mittlere fiktive Temperatur von weniger als 1070 °C, vorzugsweise weniger als 1055 °C, einstellt. Es hat sich gezeigt, dass dadurch eine vergleichsweise dichte Netzwerkstruktur erzeugt wird, die einer weiteren - lokalen - Kompaktierung durch UV-Bestrahlung entgegenwirkt.

Die defektausheilende Wirkung von Wasserstoff ist bekannt. Je nach Anwendung und projektierter Lebensdauer eines optischen Bauteils ist daher häufig ein gewisser Wasserstoffgehalt vorgegeben, selbst wenn dafür andere Nachteile in Kauf zu nehmen sind. Nach dem Tempern liegt der Wasserstoffgehalt des Quarzglases jedoch unterhalb der Auflösungsgrenze des Messverfahrens. Das Quarzglas wird nachträglich mit Wasserstoff beladen. Als besonders wichtig hat sich dabei erwiesen, dass das Beladen mit Wasserstoff bei einer Temperatur unterhalb von 400 °C erfolgt, bevorzugt unterhalb von 350 °C.

Denn im thermodynamischen Gleichgewicht entstehen bei höheren Temperaturen in Quarzglas bei Gegenwart von Wasserstoff SiH-Gruppen. Die besonders niedrige Beladungstemperatur vermeidet oder vermindert dies. SiH-Gruppen können bei Bestrahlung mit energiereichem UV-Licht so genannte E'-Zentren bilden, die wiederum eine erhöhte Absorption bei einer Wellenlänge von 210 nm bewirken, die sich auch im angrenzenden Wellenlängenbereich der Einsatzstrahlung ungünstig bemerkbar macht.

Es wird dabei ein mittlerer Wasserstoffgehalt im Bereich von $0,1 \times 10^{16}$ Molekülen/$cm^3$ bis $1,0 \times 10^{18}$ Molekülen/$cm^3$ eingestellt. Wegen der niedrigen Beladungstemperatur ist ein hoher Wasserstoff-Partialdruck hilfreich, um eine hinreichende Wasserstoffbeladung innerhalb wirtschaftlich vernünftiger Behandlungsdauern zu erzielen. Der Wasserstoffpartialdruck liegt daher bevorzugt zwischen 1 und 150 bar.

Ein erhöhter Druck beschleunigt nicht nur die Wasserstoffbeladung, sondern kann auch zu einer etwas kompakteren und gegen lokale anisotrope Dichteänderung resistenteren Glasstruktur höherer Dichte beitragen.

Ergebnis des Herstellungsverfahrens ist ein Zylinder aus Quarzglas mit einem spezifischen Kompaktierungsverhalten. Nach Bestrahlung mit der spezifischen Strahlungsdosis der Wellenlänge von 193 nm - mit $5 \times 10^9$ Pulsen mit einer Pulsbreite von 125 ns und einer Energiedichte von jeweils 500 $\mu$J/$cm^2$ sowie einer Pulswiederholfrequenz von 2000 Hz - reagiert das Quarzglas mit einem Maximalwert der laserinduzierten Brechzahländerung, deren Betrag bei Vermessung mit der Einsatzwellenlänge von 193 nm einen ersten Messwert $M_{193nm}$ und bei Vermessung mit einer Messwellenlänge von 633 nm einen zweiten Messwert $M_{633nm}$ ergibt, wobei gilt: $M_{193nm}/M_{633nm} < 1,7$, vorzugsweise beträgt es weniger als 1,6 und besonders bevorzugt weniger als 1,55.

Wichtig dabei ist - dies scheint sich bei einem genügend kleinen Verhältniswert automatisch zu ergeben, dass das Verhältnis bei weiterer Bestrahlung unter denselben Bestrahlungsbedingungen konstant bleibt. Die Kenntnis dieses konstanten Verhältnisses ermöglicht eine zuverlässige Prädiktion der Schädigung bei weiterer Bestrahlung mit der Einsatzstrahlung, auf Basis einer Messung bei 633 nm.

Es hat sich gezeigt, dass die Höhe des konstanten Werts des Verhältnisses $M_{193nm}/M_{633nm}$ besonders deutlich von der maximalen Beladetemperatur bei der Behandlung unter Wasserstoff und von der dabei im Quarzglas erzeugten mittleren Wasserstoff-Konzentration beeinflusst wird. Die Temperatur der Wasserstoffbeladung kann dabei als Maß für die Anzahl an Defektstellen und SiH-Gruppen betrachtet werden.

Aus dem Quarzglaszylinder wird durch übliche Nachbehandlungsschritte, wie Schneiden, Schleifen, Polieren das optische Bauteil für den Einsatz in der Mikrolithographie für die Einsatzwellenlänge von 193 nm erhalten.

Um den Kontakt des Si02-Netzwerks mit halogenhaltigen Trocknungsreagenzien zu vermeiden, erfolgt das Trocknen des Sootkörpers gemäß Verfahrensschritt (b) vorzugsweise rein thermisch unter Vakuum oder unter Inertgas und umfasst eine Behandlung des Sootkörpers bei einer Trocknungstemperatur im Bereich zwischen 1100 °C und 1350 °C, vorzugsweise bei maximal 1300 °C.

Durch Verzicht auf halogenhaltige Trocknungsreagenzien wird ein Eintrag von Halogenen in den Sootkörper vermieden, so dass diese nicht nachträglich wieder entfernt werden müssen. Andererseits entstehen durch die langwierige thermische Behandlung unter reduzierenden Bedingungen Sauerstoff-Fehlstellen, da für die entfernten OH-Gruppen ein geeigneter Substituent nicht unmittelbar zur Verfügung steht. Die Sauerstoff-Fehlstellen beeinträchtigen die UV-Strahlenbeständigkeit des Quarzglases.

Aus diesem Grund erfolgt nach Abschluss der Trocknungsbehandlung bei gleicher oder bei niedrigerer Temperatur das Behandeln des Sootkörpers in $N_2O$ enthaltender Atmosphäre. Behandlungstemperaturen von weniger als 500 °C haben sich dabei besonders bewährt. Der $N_2O$-Gehalt der Atmosphäre beträgt dabei zwischen 0,1 und 10 Vol.-%, vorzugsweise liegt er zwischen 0,5 und 5 Vol.-%, die Behandlungsdauer beträgt mindestens 10h.

Bei Stickoxidgehalten unterhalb von 0,1 Vol.-% ergibt sich eine geringe oxidative Wirkung und bei Stickoxidgehalten oberhalb von 10 Vol.-% kann es zu einer Überbeladung des $SiO_2$-Netzwerks mit Stickstoff und zu einer Blasenbildung beim nachfolgenden Verglasen kommen. Da Behandlung erfolgt bei so niedriger Temperatur, dass die Porosität des Sootkörpers erhalten bleibt. Bei Behandlungstemperaturen von weniger als 200 °C ist die Reaktivität von $N_2O$ jedoch sehr gering und sind lange Behandlungsdauern erforderlich, bis sich ein merklicher Effekt in Bezug auf die Absättigung von Sauerstofffehlstellen ergibt.

Ausführungsbeispiel

Nachfolgend wird die Erfindung anhand von Ausführungsbeispielen und einer Zeichnung näher erläutert. In der Zeichnung zeigen

**Figur 1** ein Diagramm, in dem das Verhältnis von Maßzahlen (nämlich die maximale Brechzahlerhöhung) einer Schädigung durch Kompaktierung bei Vermessung mit einer Messwellenlänge von 193 nm und mit einer Messwellenlänge von 633 nm gegen die Bestrahlungsdosis aufgetragen ist,

**Figur 2**    ein Diagramm, in dem das aufgrund einer Modellrechnung ermittelte Verhältnis $M_{193nm}/M_{633nm}$ gegen Messwerte des Verhältnisses aufgetragen ist, und

**Figur 3**    ein Ergebnis der Modellrechnung, das die Abhängigkeit des Verhältnisses $M_{193nm}/M_{633nm}$ vom Wasserstoffgehalt des Quarzglases und der Wasserstoff-Beladungstemperatur in dreidimensionaler Darstellung zeigt.

Probenherstellung

Es wird ein Sootkörper durch Flammenhydrolyse von $SiCl_4$ anhand des OVD-Verfahrens hergestellt. Der Sootkörper wird bei einer Temperatur von 1200 °C 50 h lang in einem Heizofen mit einem Heizelement aus Grafit unter Vakuum dehydratisiert. Das im Heizofen vorhandene Grafit erzeugt reduzierende Bedingungen (wird der Sootkörper nach diesem Behandlungsstadium unmittelbar verglast, so wird Quarzglas erhalten, das Sauerstoff-Fehlstellen in einer Größenordnung von $1,7 \times 10^{16}$ cm$^{-3}$ enthält).

Der thermisch getrocknete Sootkörper wird anschließend in einer oxidierend wirkenden Atmosphäre behandelt. Dabei wird der Sootkörper in einer Behandlungskammer kontinuierlich mit einem Behandlungsgas von Distickstoffmonoxid ($N_2O$; 1,5 Vol.-%) in einem Trägergasstrom aus Stickstoff auf eine Temperatur von 450 °C aufgeheizt und bei dieser Temperatur 20h lang gehalten.

Danach wird der getrocknete und nachbehandelte Sootkörper in einem Sinterofen bei einer Temperatur von ca. 1400 °C unter Vakuum ($10^{-2}$ mbar) zu einem transparenten Quarzglasrohling verglast. Dieser wird anschließend durch thermisch mechanische Homogenisierung (Verdrillen) und Bildung eines Quarzglas-Zylinders homogenisiert.

Nach Abschluss der Homogenisierungsbehandlung liegt der Hydroxylgruppengehalt des Sootkörpers bei etwa 25 Gew.-ppm.

Zum Abbau mechanischer Spannungen und zur Verminderung der Doppelbrechung sowie zur Erzeugung einer kompaktierungsresistenten Glasstruktur wird der Quarzglas-Zylinder einer Temperbehandlung unterzogen, bei der der Quarzglas-Zylinder während einer Haltezeit von 8 Stunden unter Luft und Atmosphärendruck auf 1190 °C erhitzt und anschließend mit einer Abkühlrate von 4 °C/h auf eine Temperatur von 1050 °C abgekühlt und bei dieser Temperatur 4 Stunden lang gehalten wird. Daraufhin wird der Quarzglas-Zylinder mit einer höheren Abkühlrate von 50°C/h auf eine Temperatur von 300 °C abgekühlt, woraufhin der Ofen abgestellt und der Quarzglas-Zylinder der freien Abkühlung des Ofens überlassen wird.

Der so behandelte Quarzglaszylinder hat einen Außendurchmesser von 350 mm und eine Dicke von 60 mm. Über die Dicke gemessen stellt sich eine mittlere fiktive Temperatur von 1065 °C ein.

Danach wird der Quarzglaszylinder mit Wasserstoff beladen. Die zweistufige Behandlung erfolgt in einer Atmosphäre aus 100 Vol.-% Wasserstoff durch Erhitzen bei einer Temperatur $T_{Beladen}$ von 380°C, zunächst bei einem Druck $p1_{Beladen}$ von 11 bar und einer Haltedauer $t1_{Beladen}$ von 30h, und anschließend bei einem Druck $p2_{Beladen}$ von 1 bar und einer Haltedauer $t2_{Beladen}$ von 80h.

Der danach erhaltene Quarzglaszylinder ist im Wesentlichen frei von Chlor, Sauerstoffdefektstellen und SiH-Gruppen (unterhalb der Nachweisgrenze von $5 \times 10^{16}$ Molekülen/cm$^3$), und er zeichnet sich innerhalb eines Durchmessers von 280 mm (CA-Bereich) durch einen mittleren Wasserstoffgehalt von $40 \times 10^{16}$ Molekülen/cm$^3$ und einen Hydroxylgruppengehalt von 25 Gew.-ppm aus.

In Tabelle 1 sind die Parameter der einzelnen Verfahrensschritte und die Messergebnisse für Probe 1 und für weitere ähnlich hergestellte Proben 2 bis 7 zusammengefasst, wobei die Proben 1 bis 4 und 6, 7 nicht erfindungsgemäß sind.

Messergebnisse

**Tabelle 1**

| Probe | 1 | 2 | 3 | 4 | 5 | 6 | 7 |
|---|---|---|---|---|---|---|---|
| $T_{N2O\text{-}Behandlung}$ (°C) / $t_{N2O\text{-}Behandlung}$ (h) | 550 / 20 | 550 / 20 | 550 / 20 | - | 450 / 20 | - | - |
| $T1_{Tempern}$ (°C) / $t1_{Tempern}$ (h) | 1190 / 8 | 1190 / 8 | 1190 / 8 | 1190 / 8 | 1190 / 8 | 1190 / 8 | 1190 / 8 |
| $T2_{Tempern}$ (°C) / $t2_{Tempern}$ (h) | 1050 / 4 | 1100/4 | 1050 / 4 | 1050 / 4 | 980 / 4 | 1100/4 | 1070 / 4 |
| $T_{Beladen}$ (°C) | 380°C | 400°C | 400 | 425°C | 380°C | 425°C | 450°C |

(fortgesetzt)

| Probe | 1 | 2 | 3 | 4 | 5 | 6 | 7 |
|---|---|---|---|---|---|---|---|
| t1 $_{Beladen}$ (h) / p1 $_{Beladen}$ (bar) | 30h @ 11bar | 50h @ 100bar | 30h @ 5bar | 30h @ 5bar | 30h @ 11bar | 15h @ 50bar | 6h @ 11 bar |
| t2$_{Beladen}$ (h) / p2$_{Beladen}$ (bar) | 80h @ 1bar | 70h @ 25bar | 70h @ 0,9bar | 70h @ 0,9bar | 80h @ 1bar | 70h @ 6bar | 70h @ 0.6bar |
| OH (Gew.-ppm) | 25 | 21 | 22 | 37 | 35 | 38 | 40 |
| Mittelwert von Tf (°C) | 1065 | 1102 | 1067 | 1060 | 1054 | 1105 | 1075 |
| Wasserstoffgehalt (x $10^{16}$ Moleküle/cm$^3$) | 40 | 850 | 30 | 30 | 40 | 200 | 20 |
| SiH-Gehalt (x $10^{16}$ Moleküle/cm$^3$) | 6 | 212 | 15 | 20 | 4 | 100 | 20 |
| M$_{193nm}$/M$_{633nm}$ | 1,55 | 4,70 | 1,69 | 1,75 | 1,53 | 15,27 | 1,75 |

Messung der Kompaktierung

Alle Proben wurden mit Strahlung einer Wellenlänge von 193 nm bestrahlt, die durch folgende Dosis gekennzeichnet ist:

Pulszahl: 5 x $10^9$ Pulse; Pulsbreite:125 ns; Energiedichte: jeweils 500 $\mu$J/cm$^2$; Pulswiederholfrequenz: 2000 Hz

An der so bestrahlten Probe wird der Betrag der lokalen maximalen Brechzahländerung gegenüber dem nicht bestrahlten Glas ermittelt und zwar sowohl durch Vermessung mit einer Messwellenlänge von 193 nm (Betrag der maximalen Brechzahländerung: M$_{193nm}$) und durch Vermessung mit einer Messwellenlänge von 633 nm (Betrag der maximalen Brechzahländerung: M$_{633nm}$). Das Verhältnis der Messwerte M$_{193nm}$/M$_{633nm}$ ist in der letzten Zeile von Tabelle 1 wiedergegeben.

Die Messergebnisse zeigen, dass das Verhältnis M$_{193nm}$/M$_{633nm}$ als Qualitätshinweis für eine geringe und vorhersagbare Kompaktierung angesehen werden kann, offenbar maßgeblich von den Parametern bei der Nachbehandlung des Sootkörpers in N$_2$O-haltiger Atmosphäre und Nachbehandlung des verglasten Quarzglasrohlings in H$_2$-haltiger Atmosphäre bestimmt wird. Dabei scheinen insbesondere die Intensität der N$_2$-Behandlung für die Beseitigung von Sauerstoffdefektstellen und die Temperatur bei der Wasserstoffbeladung für die Vermeidung von SiH-Gruppen eine entscheidende Rolle zu spielen.

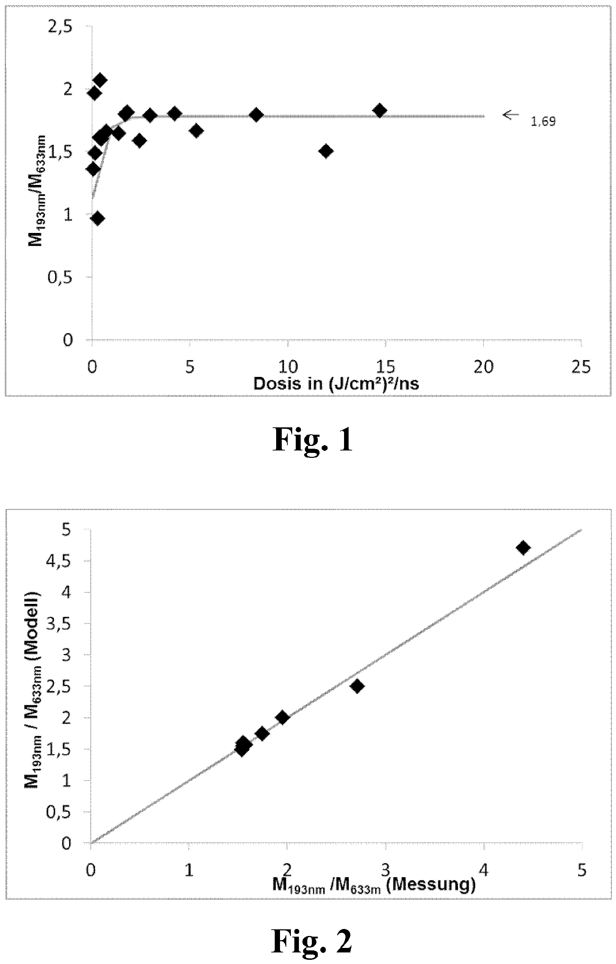

Dies zeigen auch die weiteren, nachfolgend anhand der Diagramme der Figuren 1 bis 4 erörterten Messergebnisse.

**Figur 1** zeigt für Probe 3 die Entwicklung des Verhältnisses V (M193nm/M633nm) mit der Bestrahlungsdosis (Dosis) als Produkt von Energiedichte zum Quadrat und Pulszahl geteilt durch die zeitliche Pulsbreite in ns (in der Einheit (J/cm$^2$)2/ns)

Demnach steigt das Verhältnis M193nm/M633nm zu Beginn der Bestrahlung zunächst steil von 1,0 auf etwa 1,69 an und bleibt danach (nach einer Pulszahl von etwa 3x108 Pulsen; beziehungsweise nach einer Dosis D von etwa 3 J/cm$^2$)$^2$/ns etwa konstant auf diesem Wert (im Folgenden auch als "Endwert" bezeichnet). Entsprechende Versuche wurden für andere Quarzglas-Qualitäten durchgeführt. Ähnliche Verläufe des Verhältnisses M$_{193nm}$/M$_{633nm}$ mit der Bestrahlungsdosis zeigten die Proben 1 und 5. Bei den übrigen Proben zeigte sich ein anfänglich stärkerer Anstieg des Verhältnis M$_{193nm}$/M$_{633nm}$ auf mehr als 1,7 und auch ein weniger konstanter Verlauf mit zunehmender Bestrahlungsdosis. Hierbei handelt es sich um Vergleichsproben (das sind die Proben 2, 4, 6 und 7).

Bei den Proben 1, 3 und 5 ist es wegen der weitgehenden Konstanz des Verhältnis M$_{193nm}$/M$_{633nm}$ möglich, durch laufende Messungen bei einer Wellenlänge von 633 nm den Grad der Kompaktierung durch den Einsatz des Quarzglases mit UV-Laserstrahlung von 193 nm verlässlich anzugeben.

Auf Basis der Ergebnisse zahlreicher derartiger Messungen wurde gefunden, dass unter der Bedingung, dass das Quarzglas einer hinreichenden oxidativen Behandlung unter N$_2$O unterzogen worden ist, diejenigen Parameter, die den Endwert des besagten Verhältnisses beeinflussen letztlich in der Beladungstemperatur bei der Wasserstoffbeladung (T$_{Beladen}$ in °C) und der dabei im Quarzglas erzeugten mittleren Wasserstoff-Konzentration (C$_{H2}$ in $10^{17}$ Moleküle/cm$^3$) zusammengefasst werden können.

So ist für die Bildung von SiH-Gruppen unter anderem die Temperatur beim Beladen des Quarzglases mit Wasserstoff maßgeblich. Je geringer die Temperatur ist, umso geringer ist die im thermischen Gleichgewicht sich einstellende SiH-Gruppen-Konzentration. Andererseits erfolgt die Beladung mit Wasserstoff diffusionsgesteuert, so dass geringe Beladungstemperaturen - abhängig von der Diffusionslänge und einem akzeptablen Konzentrationsgradienten - lange Behandlungsdauern erfordern.

Der Beladungsprozess ist energie- und zeitaufwändig und daher so kurz und "kalt" wie möglich, jedoch so lange wie nötig zu führen, um ein vorgegebenes Kompaktierungsverhalten des Quarzglases zu gewährleisten. Diese Abschätzung wurde bisher empirisch vorgenommen. Es hat sich aber gezeigt, dass sich zur Abschätzung des Endwertes für das Verhältnis $M_{193nm}/M_{633nm}$ folgende Gleichung eignet:

$$M_{193nm}/M_{633nm} = 1{,}47 + 0{,}0345 \times 2^{((T_{Beladung} - 400)/25)} \times C_{H2} \qquad (1)$$

Demnach hat der Endwert bei 1,47 derzeit ein Limit, das nicht unterschritten wird. Zusätzliche Beiträge ergeben sich durch die Parameter der Wasserstoff-Beladung. Auf Basis des Rechenmodells (1) kann somit der Endwert für das Verhältnis $M_{193nm}/M_{633nm}$ und damit die Kompaktierungsneigung des Quarzglases gegenüber UV-Strahlung einer Wellenlänge von 193 nm, insbesondere bei linear polarisierter Strahlung, abgeschätzt und dadurch die Wasserstoffbeladung optimiert werden.

Dass diese Modellannahme zutrifft zeigt auch **Figur 2**. Hier ist für einige der Proben aus Tabelle 1 der anhand der oben angegebenen Modellrechnung (1) ermittelte Endwert des Verhältnisses $M_{193nm}/M_{633}$ aufgetragen gegen die tatsächlich gemessenen Endwerte nach Bestrahlung mit der oben spezifizierten Bestrahlungsdosis.Es zeigt sich, dass die Messwerte nahezu exakt auf einer Geraden mit der Steigung 1 liegen, was als Beleg für die Richtigkeit des Modells gemäß Gleichung (1) angesehen werden kann.

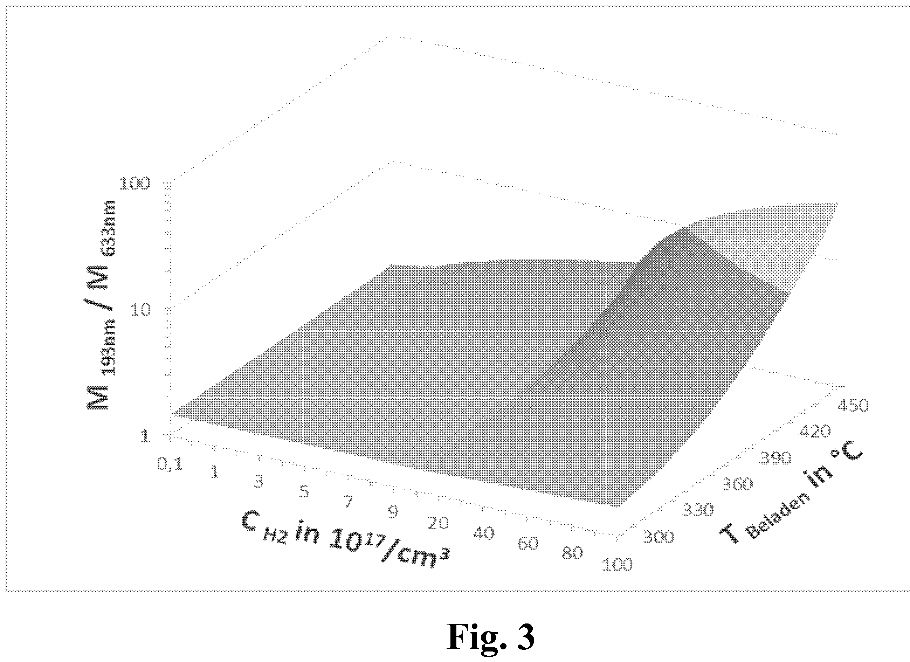

Das Ergebnis wird verständlicher bei Betrachtung der dreidimensionalen Modellierung von Figur 3. Hier ist der Endwert des Verhältnisses $M_{193nm}/M_{633}$ (als Maßzahl für die Kompaktierungsneigung des Quarzglases) aufgetragen gegen den Wasserstoffgehalt des Quarzglases $C_{H2}$ in $10^{17}$ Molekülen/cm$^3$ (x-Achse) und gegen die Temperatur $T_{Beladen}$ in °C bei der Wasserstoffbeladung (z-Achse). Die Beladungstemperatur $T_{Beladen}$ ist dabei gleichzeitig ein Maß für die SiH-Konzentration.

Demnach steigt die Kompaktierungsneigung mit der Beladungstemperatur grundsätzlich stark, und mit der Wasserstoff-Konzentration leicht an. Häufig ist eine gewisse Wasserstoff-Konzentration vorgegeben. Diese Vorgabe kann grundsätzlich bei hoher Beladungstemperatur innerhalb kurzer Zeit oder bei niedriger Beladungstemperatur in längerer Zeit erfüllt werden. Im erstgenannten Fall ergibt sich zwangsläufig eine höhere Kompaktierungsneigung, im zweiten Fall ein wirtschaftlich aufwändigerer Herstellungsprozess.

Wird ergänzend zur Wasserstoff-Konzentration auch die maximal zulässige Kompaktierungsneigung vorgegeben, so kann anhand des Modells die höchste, gerade noch zulässige Beladetemperatur bestimmt und so die Beladedauer auf ein Minimum verkürzt werden.

**Patentansprüche**

1. Optisches Bauteil aus synthetischem Quarzglas zur Verwendung in der ArF-Excimerlaser-Lithographie mit einer Einsatzwellenlänge von 193 nm, mit einer Glasstruktur im Wesentlichen ohne Sauerstoffdefektstellen, einem Wasserstoffgehalt im Bereich von 0,1 x $10^{16}$ Molekülen/cm$^3$ bis 1,0 x $10^{18}$ Molekülen/cm$^3$ und einem Gehalt an SiH-Gruppen von weniger als 2 x $10^{17}$ Molekülen/cm$^3$ und mit einem Gehalt an Hydroxylgruppen im Bereich zwischen 0,1 und 100 Gew.-ppm, wobei die Glasstruktur eine fiktive Temperatur von weniger 1070 °C aufweist und auf Bestrahlung mit Strahlung einer Wellenlänge von 193 nm mit 5 x $10^9$ Pulsen mit einer Pulsbreite von 125 ns und einer Energiedichte von jeweils 500 $\mu$J/cm$^2$ sowie einer Pulswiederholfrequenz von 2000 Hz mit einer laserinduzierten Brechzahländerung reagiert, deren Betrag bei Vermessung mit der Einsatzwellenlänge von 193 nm einen ersten Messwert $M_{193nm}$ und bei Vermessung mit einer Messwellenlänge von 633 nm einen zweiten Messwert $M_{633nm}$ ergibt, wobei gilt: $M_{193nm}/M_{633nm} < 1{,}7$.

2. Optisches Bauteil nach Anspruch 1, **dadurch gekennzeichnet, dass** bei Vermessung der laserinduzierten Brechzahländerung für das Verhältnis von erstem Messwert $M_{193nm}$ und zweitem Messwert $M_{633nm}$ gilt: $M_{193nm}/M_{633nm} < 1{,}6$ und bevorzugt: $M_{193nm}/M_{633nm} < 1{,}55$.

3. Optisches Bauteil nach Anspruch 1 oder 2, **gekennzeichnet durch** eine fiktive Temperatur unterhalb von 1055 °C.

4. Optisches Bauteil nach einem der vorhergehenden Ansprüche, **gekennzeichnet durch** einen Gehalt an Hydroxylgruppen zwischen 10 bis 60 Gew.-ppm.

5. Optisches Bauteil nach einem der vorhergehenden Ansprüche, **gekennzeichnet durch** einen Gehalt an Fluor von weniger als 10 Gew.-ppm.

**6.** Optisches Bauteil nach einem der vorhergehenden Ansprüche, **gekennzeichnet durch** einen Gehalt an Chlor von weniger als 0,1 Gew.-ppm.

**7.** Verfahren zur Herstellung eines optischen Bauteils aus Quarzglas nach einem der vorhergehenden Ansprüche 1 bis 6, umfassend die folgenden Verfahrensschritte:

(a) Erzeugen eines porösen Sootkörpers aus $SiO_2$ durch Flammenhydrolyse einer Silizium enthaltenden Ausgangssubstanz,
(b) Trocknen des Sootkörpers,
(c) Behandeln des Sootkörpers in einer oxidierend wirkenden Atmosphäre, die $N_2O$ enthält, bei einer Behandlungstemperatur von weniger als 500 °C, wobei der $N_2O$-Gehalt der Atmosphäre zwischen 0,1 und 10 Vol.-% und die Behandlungsdauer mindestens 10 h betragen, mit der Maßgabe, dass durch das Trocknen nach Verfahrensschritt (b) und durch das Behandeln gemäß Verfahrensschritt (c) ein Hydroxylgruppengehalt im Sootkörper eingestellt wird, derart, dass durch
(d) anschließendes Sintern des Sootkörpers, so dass ein Halbzeug aus Quarzglas erhalten wird, das einen mittleren Hydroxylgruppengehalt im Bereich zwischen 0,1 und 100 Gew.-ppm aufweist, und
(e) Formen des Halbzeugs zu einem Rohling aus Quarzglas und Tempern des Rohlings derart, dass er eine mittlere fiktive Temperatur von weniger als 1070 °C aufweist,
(f) Beladen des Rohlings mit Wasserstoff durch Erhitzen in einer Wasserstoff enthaltenden Atmosphäre bei einer Temperatur unterhalb von 400 °C unter Erzeugung eines mittleren Wasserstoffgehalts im Bereich von $0,1 \times 10^{16}$ Molekülen/$cm^3$ bis $1,0 \times 10^{18}$ Molekülen/$cm^3$.

**8.** Verfahren nach Anspruch 7, **dadurch gekennzeichnet, dass** das Trocknen des Sootkörpers gemäß Verfahrensschritt (b) eine Behandlung des Sootkörpers bei einer Trocknungstemperatur im Bereich zwischen 1100 °C und 1350 °C, vorzugsweise bei maximal 1300 °C, umfasst.

**9.** Verfahren nach Anspruch 7 oder 8, **dadurch gekennzeichnet, dass** der $N_2O$-Gehalt der Atmosphäre beim Behandeln in $N_2O$ enthaltender Atmosphäre zwischen 0,5 und 5 Vol.-% beträgt.

**10.** Verfahren nach einem der Ansprüche 7 bis 9, **dadurch gekennzeichnet, dass** das Beladen des Quarzglasrohlings mit Wasserstoff bei einer Temperatur unterhalb von 350°C erfolgt.

**11.** Verfahren nach einem der Ansprüche 7 bis 10, **dadurch gekennzeichnet, dass** das Beladen des Quarzglasrohlings mit Wasserstoff bei einem Druck zwischen 1 und 150 bar erfolgt.

**Claims**

**1.** An optical component made of synthetic quartz glass for use in ArF excimer laser lithography with an applied wavelength of 193 nm, with a glass structure substantially without oxygen defect sites, a hydrogen content in the range of $0.1 \times 10^{16}$ molecules/$cm^3$ to $1.0 \times 10^{18}$ molecules/$cm^3$ and a content of SiH groups of less than $2 \times 10^{17}$ molecules/$cm^3$ and with a content of hydroxyl groups in the range between 0.1 and 100 wt. ppm, wherein the glass structure has a fictive temperature of less than 1070°C and reacts to irradiation with radiation of a wavelength of 193 nm with $5 \times 10^9$ pulses with a pulse width of 125 ns and an energy density of 500 $\mu$J/$cm^2$ each time and a pulse repetition frequency of 2000 Hz with a laser-induced refractive-index change, the amount of which upon measurement with the applied wavelength of 193 nm yields a first measured value $M_{193nm}$ and upon measurement with a measurement wavelength of 633 nm a second measured value $M_{633nm}$, where: $M_{193nm}/M_{633nm} < 1.7$.

**2.** The optical component according to claim 1, **characterized in that** upon measurement of the laser-induced refractive-index change the following is applicable to the ratio of first measured value $M_{193nm}$ and second measured value $M_{633nm}$: $M_{193nm}/M_{633nm} < 1.6$ and preferably: $M_{193nm}/M_{633nm} < 1.55$.

**3.** The optical component according to claim 1 or 2, **characterized by** a fictive temperature below 1055°C.

**4.** The optical component according to any one of the preceding claims, **characterized by** a content of hydroxyl groups between 10 and 60 wt. ppm.

**5.** The optical component according to any one of the preceding claims, **characterized by** a content of fluorine of less than 10 wt. ppm.

**6.** The optical component according to any one of the preceding claims, **characterized by** a content of chlorine of less than 0.1 wt. ppm.

**7.** A method for producing an optical component made of quartz glass according to any one of the preceding claims 1 to 6, comprising the following method steps:

a) producing a porous soot body of $SiO_2$ by flame hydrolysis of a silicon-containing start substance,
b) drying the soot body,
c) treating the soot body in an oxidizing atmosphere containing $N_2O$, wherein the treatment in the $N_2O$- containing atmosphere is carried out at a treatment temperature of less than 500°C, wherein a $N_2O$ content of the atmosphere is between 0.1 and 10 vol.-%, and wherein the treatment lasts for at least 10 hours, with the proviso that a hydroxyl group content is set in the soot body by drying according to method step (b) and by treatment according to method step (c) in such a manner that due to
d) subsequent sintering of the soot body a semifinished product of quartz glass is obtained that has a mean hydroxyl group content in the range between 0.1 and 100 wt. ppm, and
e) shaping the semifinished product into a blank of quartz glass and annealing the blank such that it has a mean fictive temperature of less than 1070°C,
f) loading the blank with hydrogen by heating in a hydrogen-containing atmosphere at a temperature below 400°C while producing a mean hydrogen content in the range of $0.1 \times 10^{16}$ molecules/cm$^3$ to $1.0 \times 10^{18}$ molecules/cm$^3$.

**8.** The method according to claim 7, **characterized in that** the drying of the soot body according to method step (b) includes a treatment of the soot body at a drying temperature in the range between 1100°C and 1350°C, preferably at not more than 1300°C.

**9.** The method according to claim 7 or 8, **characterized in** in the treatment in the $N_2O$-containing atmosphere the $N_2O$ content of the atmosphere is between 0.5 and 5 vol.-%.

**10.** The method according to any one of claims 7 to 9, **characterized in that** the loading of the quartz glass blank with hydrogen is carried out at a temperature below 350°C.

**11.** The method according to any one of claims 7 to 10, **characterized in that** the loading of the quartz glass blank with hydrogen is carried out at a pressure between 1 and 150 bar.

**Revendications**

**1.** Composant optique composé d'un verre de quartz synthétique destiné à être utilisé dans la lithographie par laser à excimère à ArF avec une longueur d'onde employée de 193 nm, avec une structure de verre sensiblement sans défaut d'oxygène, une teneur en hydrogène dans la plage allant de $0,1 \times 10^{16}$ molécules/cm$^3$ à $1,0 \times 10^{18}$ molécules/cm$^3$ et une teneur en groupes SiH inférieure à $2 \times 10^{17}$ molécules/cm$^3$ et avec une teneur en groupes hydroxyle dans la plage entre 0,1 et 100 ppm en poids, dans lequel la structure de verre présente une température fictive inférieure à 1070 °C et réagit à une irradiation avec un rayonnement d'une longueur d'onde de 193 nm avec $5 \times 10^9$ impulsions avec une largeur d'impulsion de 125 ns et une densité énergétique de respectivement 500 $\mu J/cm^2$ ainsi qu'une fréquence de répétition d'impulsions de 2000 Hz avec une modification d'indice de réfraction induite par laser, dont la valeur donne lieu à une première valeur de mesure $M_{193nm}$ lors de la mesure avec la longueur d'onde employée de 193 nm et à une deuxième valeur de mesure $M_{633nm}$ lors de la mesure avec une longueur d'onde de mesure de 633 nm, dans lequel s'applique : $M_{193nm}/M_{633nm} < 1,7$.

**2.** Composant optique selon la revendication 1, **caractérisé en ce que** s'applique lors de la mesure de la modification d'indice de réfraction induite par laser pour le rapport entre une première valeur de mesure $M_{193nm}$ et une deuxième valeur de mesure $M_{633nm}$ : $M_{193nm}/M_{633nm} < 1,6$ et de manière préférée : $M_{193nm}/M_{633nm} < 1,55$.

**3.** Composant optique selon la revendication 1 ou 2, **caractérisé par** une température fictive inférieure à 1055 °C.

4. Composant optique selon l'une quelconque des revendications précédentes, **caractérisé par** une teneur en groupes hydroxyle entre 10 à 60 ppm en poids.

5. Composant optique selon l'une quelconque des revendications précédentes, **caractérisé par** une teneur en fluor inférieure à 10 ppm en poids.

6. Composant optique selon l'une quelconque des revendications précédentes, **caractérisé par** une teneur en chlore inférieure à 0,1 ppm en poids.

7. Procédé servant à fabriquer un composant optique à partir de verre de quartz selon l'une quelconque des revendications 1 à 6, comprenant les étapes de procédé suivantes :

(a) de production d'un corps de suie poreux à partir de de $SiO_2$ par hydrolyse à la flamme d'une substance de départ contenant du silicium,
(b) de séchage du corps de suie,
(c) de traitement du corps de suie dans une atmosphère à action oxydante, qui contient du $N_2O$, à une température de traitement inférieure à 500 °C, dans lequel la teneur en $N_2O$ de l'atmosphère présente une valeur entre 0,1 et 10 % en vol. et la durée de traitement est d'au moins 10 h à la condition que par le séchage selon l'étape de procédé (b) et par le traitement selon l'étape de procédé (c), une teneur en groupes hydroxyle dans le corps de suie soit réglée par
(d) un frittage consécutif du corps de suie de sorte qu'un produit semi-fini est obtenu à partir du verre de quartz, qui présente une teneur en groupes hydroxyle moyenne dans la plage entre 0,1 et 100 ppm en poids, et
(e) par le façonnage du produit semi-fini en une ébauche composée de verre de quartz et le recuit de l'ébauche de telle manière qu'elle présente une température fictive moyenne inférieure à 1070 °C,
(f) par le chargement de l'ébauche en hydrogène par réchauffage dans une atmosphère contenant de l'hydrogène à une température inférieure à 400 °C en produisant une teneur en hydrogène moyenne dans la plage de 0,1 x $10^{16}$ molécules/$cm^3$ à 1,0 x $10^{18}$ molécules/$cm^3$.

8. Procédé selon la revendication 7, **caractérisé en ce que** le séchage du corps de suie selon l'étape de procédé (b) comprend un traitement du corps de suie à une température de séchage dans la plage entre 1100 °C et 1350 °C, de préférence à une température de 1300 °C au maximum.

9. Procédé selon la revendication 7 ou 8, **caractérisé en ce que** la teneur en $N_2O$ de l'atmosphère lors du traitement dans une atmosphère contenant du $N_2O$ présente une valeur entre 0,5 et 5 % en vol.

10. Procédé selon l'une quelconque des revendications 7 à 9, caractérisé e ce que le chargement de l'ébauche de verre de quartz en hydrogène est effectué à une température inférieure à 350 °C.

11. Procédé selon l'une quelconque des revendications 7 à 10, **caractérisé en ce que** le chargement de l'ébauche en verre de quartz en hydrogène est effectué à une pression entre 1 et 150 bar.

**Fig. 1**

**Fig. 2**

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009106134 A1

**In der Beschreibung aufgeführte Nicht-Patentliteratur**

- Reaction of hydrogen with hydroxyl-free vitreous silica. *J. Appl. Phys.,* Mai 1980, vol. 51 (5), 2589-2593
- **KHOTIMCHENKO et al.** Determining the Content of Hydrogen Dissolved in Quartz Glass Using the Methods of Raman Scattering and Mass Spectrometry. *Zhurnal Prikladnoi Spektroskopii,* Juni 1987, vol. 46 (6), 987-991
- **D. M. DODD et al.** *Optical Determinations of OH in Fused Silica,* 1966, 3911
- **CH. PFLEIDERER.** The UV-induced 210 nm absorption band in fused Silica with different thermal history and stoichiometry. *J. Non-Cryst. Solids,* 1993, vol. 159, 145-143